(19) **Europäisches Patentamt / European Patent Office / Office européen des brevets**

(11) **EP 1 987 700 B1**

(12) **EUROPEAN PATENT SPECIFICATION**

(45) Date of publication and mention
of the grant of the patent:
**12.05.2010 Bulletin 2010/19**

(21) Application number: **07705025.0**

(22) Date of filing: **25.01.2007**

(51) Int Cl.:
***H05B 33/08*** (2006.01)   ***G09G 3/30*** (2006.01)

(86) International application number:
**PCT/GB2007/000252**

(87) International publication number:
**WO 2007/091020 (16.08.2007 Gazette 2007/33)**

(54) **DRIVE CIRCUITS FOR CAPACITIVE LOADS**

ANSTEUERSCHALTUNGEN FÜR KAPAZITIVE LASTEN

CIRCUIT D'EXCITATION POUR CHARGES CAPACITIVES

(84) Designated Contracting States:
**AT BE BG CH CY CZ DE DK EE ES FI FR GB GR HU IE IS IT LI LT LU LV MC NL PL PT RO SE SI SK TR**

(30) Priority: **10.02.2006 GB 0602722**
**22.02.2006 GB 0603520**

(43) Date of publication of application:
**05.11.2008 Bulletin 2008/45**

(73) Proprietor: **Pelikon Limited**
**Glamorgan CF83 2RZ (GB)**

(72) Inventors:
• **FRYER, Christopher, James, Newton**
**Cambridgeshire CB4 8SD (GB)**

• **BLAKESLEY, Richard, Guy**
**Cambridge CB1 3AX (GB)**

(74) Representative: **Gosnall, Toby**
**Barker Brettell LLP**
**138 Hagley Road**
**Edgbaston**
**Birmingham**
**B16 9PW (GB)**

(56) References cited:
**GB-A- 2 327 523**

• **VANFLETEREN J ET AL: "Active matrix CdSe TFT addresses electroluminescent displays" INTERNATIONAL DISPLAY RESEARCH CONFERENCE, 4 October 1988 (1988-10-04), pages 74-79, XP010078907 Finland**

EP 1 987 700 B1

## Description

This invention relates to drive circuits for capacitive loads such as, but not necessarily limited to, those for use with electroluminescent (EL) displays.

Two thin flexible display technologies have been developed that have application in consumer goods: printed electroluminescent (EL) displays and Polymer Dispersed Liquid Crystal (PDLC) displays.

Electroluminescent materials emit light, and so glow, when an electric field is generated across them. The first known electroluminescent materials were inorganic particulate substances such as zinc sulphide, while more recently-found electroluminescent materials include a number of small-molecule organic emitters known as organic light emitting diodes (OLEDs) and some plastics - synthetic organic polymeric substances - known as light-emitting polymers (LEPs). Inorganic particulates, in a doped and encapsulated form, are still in use, particularly when mixed into a binder and applied to a substrate surface as a relatively thick layer; LEPs can be used both as particulate materials in a binder matrix or, with some advantages, on their own as a relatively thin continuous film.

This electroluminescent effect has been used in the construction of displays. In some types of these a large area of an electroluminescent (EL) material - generally referred to in this context as a phosphor - is provided to form a backlight which can be seen through a mask that defines whatever characters the display is to show. In other types there are instead individual small areas of EL material. These displays have many applications; examples are a simple digital time and date display (to be used in a watch or clock), a mobile phone display, the control panel of a household device (such as a dishwasher or washing machine), and a handheld remote controller (for a television, video or DVD player, a digibox, stereo or music centre or similar entertainment device).

Polymer Dispersed Liquid Crystals may be used to form devices that provide a display with polariserless high contrast electro-optical shuttering operation between a field "on" state that is fully transmissive and a base field "off" state that is optically non-transmissive through absorption, reflection and/or scattering processes. Chiral nematic materials seem particularly appropriate; as now explained, they have special properties which are well suited to embodiments of the invention. Thus, relatively-recent developments in Liquid Crystal technology have produced materials (such as Nematic Curvilinear Aligned Phase liquid crystals as manufactured by Raychem under the trade name NCAP or Dyed Chiral Nematic liquid crystals which can act as an optical shutter; in one state they absorb incident light, while in another state they transmit it.

It is possible to use the two technologies together in the same product to produce a display visible in all light levels and products may be thought of as relying on a hybrid technology. A segmented display of this kind is desirable for devices such as mobile phones where a keypad or the like can be reconfigured to display different keys dependent on the mode of operation of the device. Such a display is shown in PCT Publication number WO2005/121878.

A serious downside of this hybrid technology is that EL displays and PDLC displays, which represent two capacitive loads of different natures, are usually operated at different AC voltage and frequencies. EL is generally driven (for backlight purposes) at around 100V peak and 400Hz, whereas the higher capacitance PDLC should be driven at around 42V peak and 60Hz. It has heretofore been considered necessary to use two separate high voltage power supplies and array drivers for the two technologies. Further, GB2327523 discloses a display panel with a plurality of electroluminescent lamps, whereby a microprocessor compensates for the age of the lamps and keep the brightness constant.

According to a first aspect of the invention, there is provided a drive circuit for capacitive loads, which is arranged to provide, in use, a first AC signal for a first capacitive load at a first output and a second AC signal for a second capacitive load at a second output, the first and second AC signals differing in voltage and frequency, wherein the drive circuit comprises a current source, a first switching circuit connected to the current source and the first output for generating of the first AC signal, a second switching circuit connected to the current source and the second output for generating the second AC signal, in which each of the first and second switching circuits is arranged to controllably switch the polarity with which the relevant output is connected to the current source, in which the drive circuit is arranged such that, in use, the first and second switching arrangements switch polarities at different frequencies.

Such an arrangement takes advantage that a capacitive load switched at different frequencies will charge at different rates and hence to a different voltage - this will depend on the relative values of the capacitances of the first and second loads. It allows use of a common source of current (i.e. only a single current source may be needed) to be used to generate different frequency and different voltage signals.

Preferably, the current source comprises a voltage converter. The voltage converter preferably comprises an input for low voltage, typically DC, current, and an output for a high voltage (when compared to the input), typically DC, current to be provided to both first and second switching circuits. Typically, the voltage converter comprises a converter switch, the repeated switching of which causes the generation of the high voltage current. The voltage converter may comprise a flyback converter. Accordingly, the two capacitive loads may be driven from a single voltage converter such as a flyback converter.

The flyback converter may comprise an inductor and a converter switch arranged in series. The converter switch is arranged to alternate, in use, between a first state and a second state, whereby in the first state a current path is provided through the inductor and the converter switch, which current path is interrupted in the second state, such that when the converter switch changes from the first state to the second state, the inductor generates the high voltage current voltage.

The inductor may be of the form or a simple inductor or coil, or any other inductive element such as a transformed.

The flyback converter may also comprise an output diode arranged to prevent current flowing back into the flyback converter while the converter switch is in the first state.

The output diode may be any suitable device which allows current flow in substantially only one direction over the range of operating voltages of the drive circuit. For example, in some embodiments the diode may be provided by a junction within a transistor. The role of the output diode may be thought of as allowing a higher voltage than the DC supply voltage to be stored on the capacitive loads without current flowing back from the capacitive load towards the inductor.

The converter switch may be any suitable switching device and, in general, is a transistor. In the preferred arrangement, the converter switch is a field effect transistor (FET). In a particularly preferred arrangement, the converter switch is an n-channel FET. It is however conceivable that other switching means such as Bipolar transistors, switches or the like may be used.

The voltage converter may be arranged so as to generate, in use, a high voltage DC signal that has an AC component having a "source" frequency. The circuit may be arranged such that in use the first switching circuit switches polarity once per cycle of the AC component; the first switching circuit may therefore switch at half the frequency of the source frequency. The circuit may be arranged to discharge the first capacitive load once per half-cycle of the first switching circuit and hence once per cycle of the AC component.

The frequency at which the first switching circuit switches, in use, may be an integer multiple of the frequency at which the second switching circuit switches in use. This may ensure that when the second switching circuit switches, the first switching circuit is switching at the same, or substantially the same, time. When both switching circuits switch simultaneously or substantially so, both first and second capacitive loads can also be discharged simultaneously or substantially so.

A resistor may be provided between either or both switching circuits and their respective outputs. Such resistor may be used to control both the voltage output at the respective output, and the speed at which the load connected to the respective output charges. If, as is the preferred embodiment and as described above, more than one cycle of the AC component of the current from the source will applied to the one of the capacitive loads - herein the lower frequency load - it is useful to filter the AC signal applied to the lower frequency load such that the voltage applied to the lower frequency load is smoothed compared with the source current. The resistor may therefore be connected to the switching circuit of the lower frequency load.

The resistance of the resistor R associated with the lower frequency load may be chosen so that the characteristic frequency of the RC filter formed by the resistor R and the capacitance of the lower frequency capacitive load falls between the frequencies at which the two capacitive loads are switched polarity in use. This ensures that the undesired high frequency components of the signal applied to the PDLC elements are rejected whilst useful lower frequency components are not. Giving the total capacitance of the lower frequency capacitive load as C, and the resistance of resistor R as R, the characteristic

frequency may be $\dfrac{1}{2\pi RC}$.

In addition, or in an alternative, the circuit may further comprise a filter capacitor connected between either or both switching circuits and their respective outputs. Preferably, it is connected to the lower frequency load. It may be provided in addition to the resistor described above, and may be in series or parallel to that resistor. The value of "C" in the characteristic frequency given above may therefore be the total capacitance of the filter capacitor and the relevant capacitive load.

Each of the first and second capacitive loads may comprise a plurality of segments, with the drive circuit being arranged to supply each segment with an AC signal. Each segment may comprise a segment electrode, which the first or second capacitive load further comprising a common electrode shared in common between the segments.

In such a case, it may be desirable to selectively drive each segment. Accordingly, each switching circuit may comprise a plurality of segment switch sets each controllable to switch the segments electrodes to the current source, and a common electrode switch set, controllable to switch the common electrode to the current source. Each of the switch sets may selectively switch the relevant electrode between the current source and a reference voltage, such as ground. Typically, each switch set would comprise a half-H-bridge, comprising a top switch connected between the electrode and the current source and a bottom switch connected between the electrode and the reference voltage.

The drive circuit may be arranged such that the segment switching sets relating to segment electrodes that are to be provided with the AC signal are switched in common, and oppositely to the common switching set of that switching circuit. Accordingly, in use the current source will be connected to either the segment electrodes to be provided with the AC signal or the common electrode, with the other electrode or set of electrodes connected to the reference voltage. This may be represented by the switching sets having a first state, when the segment electrodes to be illuminated are connected to the current source and the common electrode is connected to the reference voltage, and a second state where the segment electrodes are connected to the reference voltage and the common electrode is connected to the current source.

In addition, the switching sets may have a third state, where the relevant electrodes of both segment and common electrodes are disconnected from both the current source and the reference potential. In such a case, the voltage on either electrode is allowed to float, although the potential difference across the capacitive load will remain generally constant. This is particularly useful on the high frequency load, where the circuit may be arranged such that, in use, when the switching set of the high frequency load switches from the first state to the second state, it does so through the third state. This allows the voltage from the current source to remain high throughout the switching of the high-frequency load, and so less charge is lost from the low-frequency load.

In a further alternative, the common electrode of the first and second capacitive loads may comprise a common common electrode shared between first and second capacitive loads, typically of the form of a conductive backplane. In such a case, the common common electrode may be, in use, connected to whichever of the first or second output that is being switched polarity at a higher frequency (in the preferred embodiment, the first). This will lead to the common common electrode being at the same polarity as the segment electrodes connected to the other output for half the applied cycles and so will lead to a further, possibly useful, reduction in voltage applied to the second capacitive load.

Preferably, the first capacitive load is an Electroluminescent (EL) display. Preferably, the second capacitive load is a Polymer Dispersed Liquid Crystal (PDLC) display.

There now follows, by way of example only, description of embodiments of the invention, described with reference to the accompanying drawings, in which:

**Figure 1** shows a prior art drive circuit;

**Figure 2** shows drive signals for use with the drive circuit of Figure 1;

**Figure 3** shows a drive circuit according to an embodiment of the present invention;

**Figure 4** shows drive signals for use with the drive circuit of Figure 3.

Figure 5 shows a circuit according to an alternative embodiment of the invention.

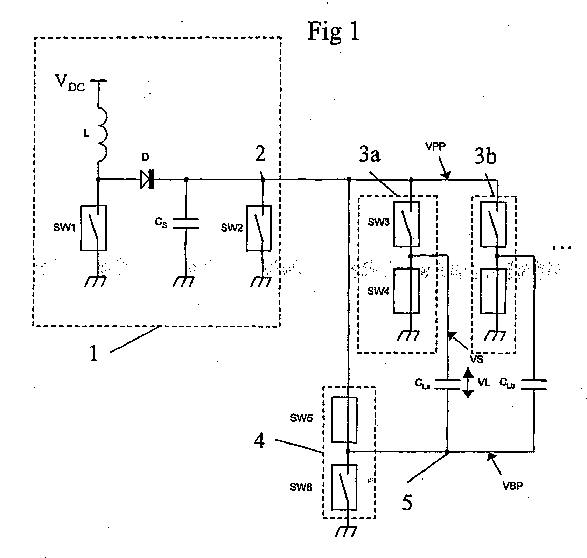

Figure 1 shows a typical prior art drive circuit, capable of producing at any one time an AC signal of only one voltage and frequency. The capacitive load - typically an EL or PDLC display - is shown as capacitors $C_{La}$, $C_{Lb}$, etc. The display typically comprises several segments to be activated separated, each segment comprising a first segment electrode but sharing a second common backplane electrode 5 with the other segments. This is depicted in that the second electrode of each of the capacitors depicted being connected in parallel.

The drive circuit comprises source of current comprising, a voltage converter 1 arranged to take a DC input at $V_{DC}$ and output at point Z a higher voltage varying DC signal VPP. The voltage converter 1 comprises a converter switch (SW1), an inductor (L), a diode (D), a smoothing capacitor ($C_s$) and a discharge switch (SW2).

The high voltage signal (VPP) is distributed to the various segments ($C_{La}$, $C_{Lb...}$) of the display by half H-bridge switches 3a (comprising switch SW3, SW4), 3b etc., and to the common backplane electrode by means of half H-bridge switches 4 (comprising switches SW5, SW6). These half H-bridges are arranged to switch each electrode, whether segment or common, between VPP and ground, and comprise a first "top" switch SW3, SW5 selectively connecting the electrode to VPP and second "bottom" switch (SW4, SW6) selectively connecting the electrode to ground. The half H-bridges may typically be integrated into a single high voltage array driver IC. In this embodiment ground can be seen as a reference potential.

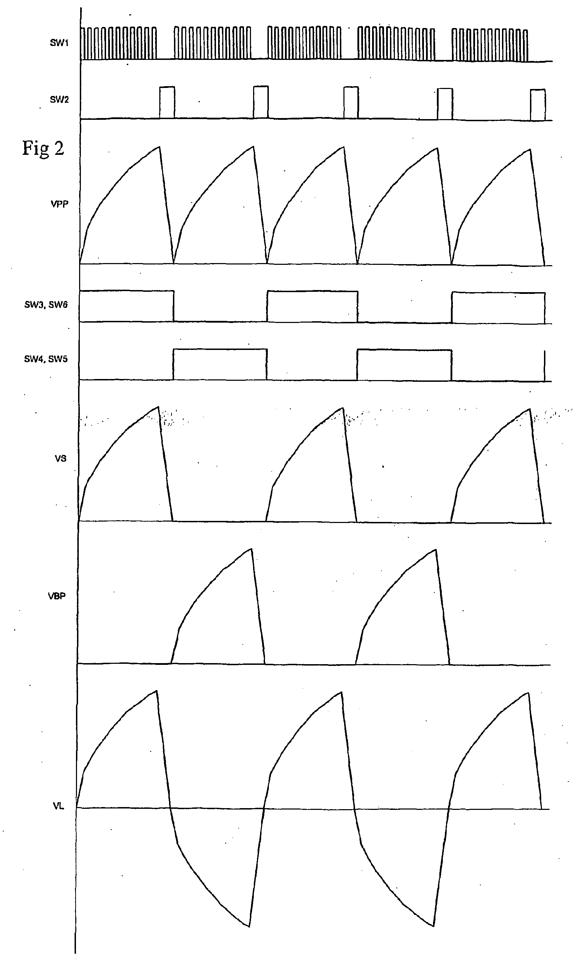

Figure 2 shows the operation of this circuit. For a segment to receive power, the half H-bridge on one side must be switched to VPP whilst that on the other is switched to ground. In the case shown in Figure 2, SW3 connects the segment electrode to VPP whilst SW6 connects the backplane to ground.

The converter switch SW1 is pulsed in order to produce current in the inductor (L) such that, on opening SW1, discharges through the diode (D) into the smoothing capacitor ($C_s$) and then through switch SW3 into the load capacitor (display elements, $C_{La}$ etc). This causes node VPP to rise in voltage and the voltage across the load (VL) to rise also.

When sufficient voltage has been achieved, converter switch SW1 ceases pulsing and SW2 is turned on in order to discharge the load and smoothing capacitances. In a one embodiment, the current flowing through SW2 may be limited by inclusion of a resistor or other means (not shown). This prevents overly fast discharge of the load.

Once the voltage has been discharged close to ground, the states of the H-bridge switches are reversed. In this case, switches SW3 and SW6 are opened whilst SW4 and SW5 are closed. The pulsing of SW1 can now recommence, VPP rises again but due to the change in polarity of the H-bridge switches, the voltage across the load capacitor (CL) now falls to a negative peak. In this way, an AC drive signal of one single voltage and frequency is produced across the display segments.

If it is desired to have supply more than one voltage and frequency, then heretofore it has been necessary to provide multiple such circuits as described above. However, the inventors have appreciated this may not be necessary.

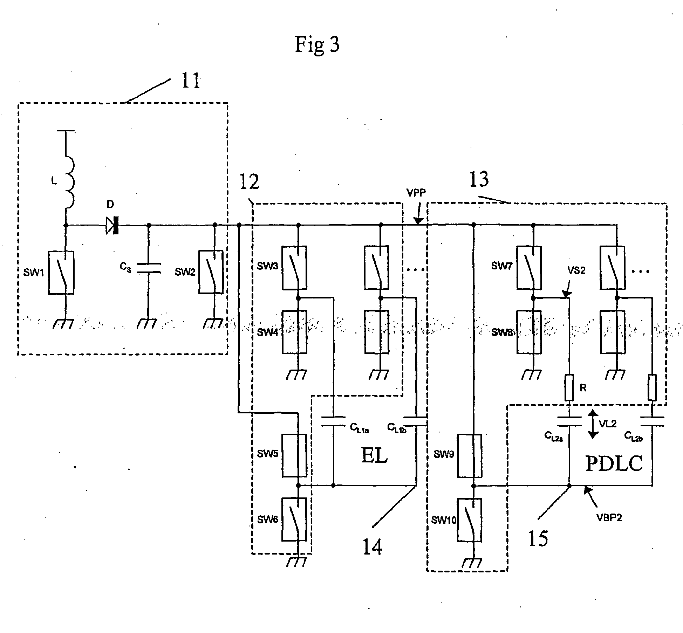

Figure 3 shows a drive circuit according to an embodiment of the present invention which is capable of achieving two different peak voltages and frequencies on two different display technologies using a single set of power supply components and a single voltage converter. Whilst two EL segments $C_{L1a}$, $C_{L1b}$ and two PDLC segments $C_{L2a}$, $C_{L2b}$ are shown, it is to be envisaged that any number of segments could be connected to such a circuit.

The voltage converter 11 is as described above with respect to Figure 1; the corresponding components have been given the same reference numerals. A first switching circuit 12 selectively connects the first capacitive load - the EL segments $C_{L1a}$, $C_{L1b}$ etc. - to the output VPP from the current source voltage converter, and a second switching circuit 13 selectively connects the second capacitive load - the PDLC segments $C_{L2a}$, $C_{L2b}$ etc. - to the same voltage converter output VPP.

Within the switching circuits, half H-bridge switch set SW5 and SW6 provide selective connection to VPP or ground (the reference voltage in this embodiment) to the common EL backplane electrode 14. A plurality of half H-bridge switch sets such as SW3 and SW4 provide selective connection to ground or VPP to each EL segment electrode. Many segment switch sets SW3, SW4 can be used with a single backplane connection. Similarly, half H-bridge switch set SW5 and SW6 provide selective connection to VPP or ground to the common PDLC backplane electrode 15. A plurality of half H-bridge switch sets such as SW3 and SW4 provide selective connection to ground or VPP to each PDLC segment electrode. Many segment switch sets SW3, SW4 can be used with a single backplane connection.

The operation of the voltage converter components (SW1, L, D, $C_s$ and SW2) is identical to that described in the prior art (see Figure 2). The operation of the EL switch sets (SW3, SW4, SW5 and SW6) is also identical to that described in the prior art (see Figure 2).

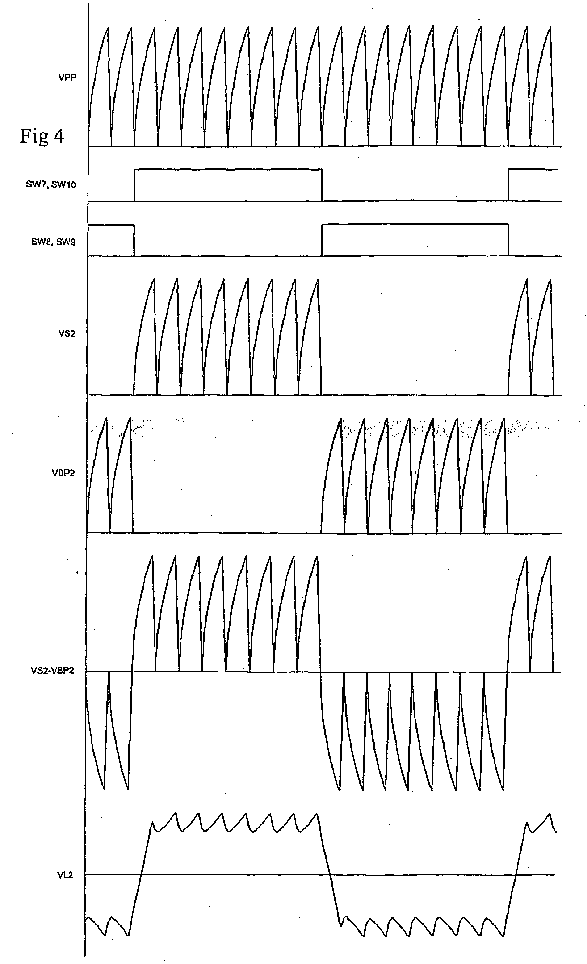

The operation of the PDLC switch sets (SW7 to SW10) is described in Figure 4. In essence, these also operate in the same way as the prior art with the exception that the polarity of the voltage applied to the capacitive load is swapped at a lower frequency than that at which the voltage converter 11 operates. This lower frequency can be seen in Figure 4 wherein the PDLC switch sets (SW7 to SW10) switch at a lower frequency than that of switch SW2 (i.e. the period of the voltage converter 11) which manifests itself in that a plurality of VPP pulses occur for a single period of any of the PDLC switch sets (SW7 to SW10). It will be seen that there are an integer number of VPP pulses for each period of the PDLC switch set and in the embodiment shown there are eight VPP pulses per PDLC switch set period.

Other embodiments could well have a different number of VPP pulses. For example, there may be roughly 2,3,4,5,6,7,9,10, 15, 20 or more VPP pulses per PDLC period.

This results in multiple high frequency half cycles being applied in a positive and then negative direction to the PDLC. This is shown in Figure 4 for the graphs for VBP2 and for VS2. It will be appreciated that VS2 shows a periodic waveform when switches SW7 and SW10 allow current to pass (and when SW9 and SW8 are open circuit). Further, VBP2 shows a periodic waveform when switches SW8 and SW9 allow current to pass (and when SW7 and SW10 are open circuit). Thus, as can be seen from the graph of VS2-VBP2 this results in a voltage which is the difference between the voltages at the outputs of the segment and common backplane electrode switch sets.

The inclusion of a resistor R in series with each PDLC element ($C_{L2a}$ etc.) filters this applied signal resulting in the lower voltage, lower frequency signal on the PDLC element (VL2). The effect of the resistor R is that the time constant for the discharge of the PDLC element ($C_{L2a}$, etc.) is increased and thereby, the PDLC element ($C_{L2a}$, etc.) does not discharge within the VPP period. This results (as can be seen in the graph for VL2) as an approximation to a square wave, which goes both positive and negative) having an AC ripple imposed thereon. This waveform is suitable for driving the PDLC elements.

The size of the resistor R should be chosen so that the characteristic frequency of the RC filter formed by the resistor R and the capacitance of the capacitive load - here the PDLC elements - falls between the frequencies at which the EL and PDLC elements are switched polarity. This ensures that the undesired high frequency components of the signal applied to the PDLC elements are rejected whilst useful lower frequency components are not. Giving the total capacitance of the PDLC elements as C, and the resistance of resistor R as R, the characteristic frequency will be $\dfrac{1}{2\pi RC}$.

In an alternative embodiment (not shown), the circuit further comprises a filter capacitor connected either in parallel or in series with the resistor R. The value of "C" in the characteristic frequency given above may therefore be the total capacitance of the filter capacitor and the relevant capacitive load.

Referring to the frequency of VL shown in Figure 2 it will be seen that it has the same frequency as VPP. Referring to the frequency of VL2 in Figure 4 it will be seen that it has a lower frequency than VPP and thus, VL2 has a lower frequency than VL.

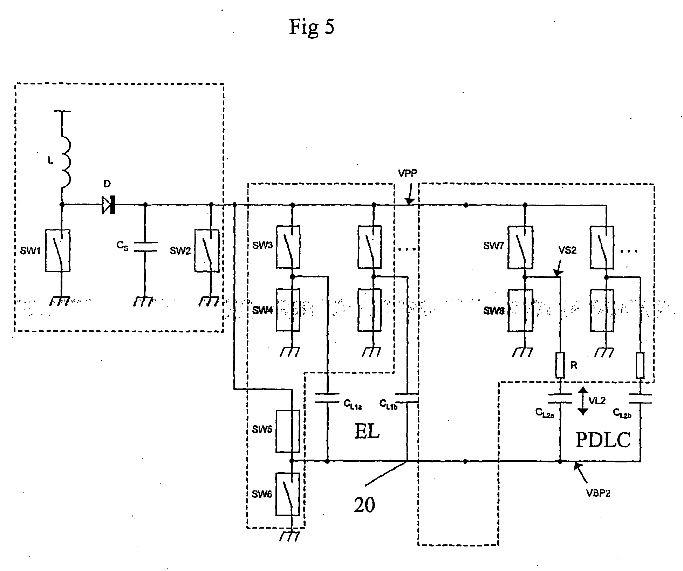

In another embodiment, the circuit of which is shown in Figure 5 of the accompanying drawings, an implementation using a common backplane drive for the two technologies is also possible. In this case, the common (EL and PDLC) backplane 20 is switched at the high (EL) frequency; i.e. the frequency of VPP. This is depicted in the circuit by merging the previous common EL and PDLC backplane electrodes 14, 15 into one electrode 20. Reusing the previous switch' nomenclature, the previous switch pairs SW3,4, SW5,6 and SW7,8 are retained but switches SW9,10 omitted as the common common electrode 20 is switched by switch pair SW5,6. Each of the switch pairs is switched according to Figures 2 and 4, with the switching of SW9 and SW10 omitted. The resulting voltage difference over the PDLC segments is only at high voltage for half of the applied half cycles and so the resulting PDLC voltage is reduced.

In the preferred arrangement, any switch referred to above is a field effect transistor (FET). It is however conceivable that other switching means such as Bipolar transistors, switches or the like may be used.

In an alternative, the EL switch sets switch polarity of the load via a third state, where electrodes of both segment and common electrodes are disconnected from both the current source and ground. In such a case, the voltage on either electrode is allowed to float, although the potential difference across the capacitive load will remain generally constant. This allows the voltage from the current source to remain high throughout the switching of the EL segments, and so less charge is lost from the PDLC segments - the ripple on VL2 will decrease.

**Claims**

1. A drive circuit for capacitive loads, which is arranged to provide, in use, a first AC signal for a first capacitive load at a first output and a second AC signal for a second capacitive load at a second output, the first and second AC signals differing in voltage and frequency, wherein the drive circuit comprises a current source, a first switching circuit connected to the current source and the first output for generating the first AC signal, a second switching circuit connected to the current source and the second output for generating the second AC signal, in which each of the first and second switching circuits are arranged to controllably switch the polarity with which the relevant output is connected to the current source, in which the drive circuit is arranged such that, in use, the first and second switching arrangements switch polarities at different frequencies.

2. The drive circuit of claim 1 in which the current source comprises a voltage converter.

3. The drive circuit of claim 2 in which the voltage converter comprises an input for low voltage DC current, and an output for a higher voltage DC current to be provided to both first and second switching circuits and in which the voltage converter preferably comprises a converter switch, the repeated switching of which causes the generation of the high voltage current and in which the voltage converter preferably comprises a flyback converter.

4. The drive circuit of any of claims 2 or 3 in which the voltage converter is be arranged as to generate, in use, a high voltage DC signal that has an AC component having a "source" frequency.

5. The drive circuit of claim 4 in which the circuit is arranged such that in use the first switching circuit switches polarity once per cycle of the AC component and in which the circuit is preferably arranged to discharge the first capacitive load once per half-cycle of the first switching circuit and hence once per cycle of the AC component.

6. The drive circuit of claims 4 or 5 in which the frequency at which the first switching circuit switches, in use, is an integer multiple of the frequency at which the second switching circuit switches in use, preferably, in use when the second switching circuit switches, the first switching circuit switches at the same, or substantially the same, time and in which, preferably, in use when both switching circuits switch simultaneously or substantially so, both first and second capacitive loads also discharge simultaneously or substantially so.

7. The drive circuit of any preceding claim in which a resistor is provided between either or both switching circuits and their respective outputs.

8. The drive circuit of claim 6 or 7 in which a resistor is connected to the switching circuit of the second output and the resistance of the resistor R is such that, in use, the characteristic frequency of the RC filter formed by the resistor R and the capacitance of load which is to be attached to the second output falls between the frequencies at which the two capacitive loads are switched polarity in use.

9. The drive circuit of any preceding claim in which the circuit further comprises a filter capacitor connected between either or both switching circuits and their respective outputs.

10. The drive circuit of any preceding claim, in which the first and second capacitive loads each comprise a plurality of segments, each segment having a segment electrode, with the drive circuit being arranged to supply each segment with an AC signal relative to a common a common electrode of each load, wherein each switching circuit comprises a plurality of segment switch sets each controllable to switch the segments electrodes to the current source, and a common electrode switch set, controllable to switch the common electrode to the current source.

**11.** The drive circuit of claim 10 in which the switch sets are arranged to switch the relevant electrode between the current source and a reference voltage, in which

each switch set preferably comprises a half-H-bridge, comprising a top switch connected between the electrode and the current source and a bottom switch connected between the electrode and the reference voltage and in which.

the drive circuit is preferably arranged such that, in use, the segment switching sets relating to segment electrodes that are to be provided with the AC signal are switched in common, and oppositely to the common switching set of that switching circuit.

**12.** The drive circuit of any of claims 10 or 11 in which the switching sets have a first state, where the segment electrodes to be illuminated are connected to the current source and the common electrode is connected to the reference voltage, and a second state where the segment electrodes are connected to the reference voltage and the common electrode is connected to the current source, and in addition the switching sets have a third state, where the relevant electrodes of both segment and common electrodes are disconnected from both the current source and the reference potential.

**13.** The drive circuit of claim 12 when dependent from claim 6 in which the circuit is arranged such that, in use, when the switching set of the second load switches from the first state to the second state, it does so through the third state.

**14.** The drive circuit of any of claims 10 to 13 in which the common electrode of the first and second capacitive loads comprises a common common electrode shared between first and second capacitive loads in which the common common electrode is, in use, connected to whichever of the first or second output that is being polarity switched at a higher frequency.

**15.** The drive circuit of any preceding claim, in combination with a first capacitive load comprising an Electroluminescent (EL) display and a second capacitive load comprising a Polymer Dispersed Liquid Crystal (PDLC) display.

**Patentansprüche**

**1.** Ansteuerschaltung für kapazitive Lasten, die eingerichtet ist, im Gebrauch ein erstes Wechselspannungssignal für eine erste kapazitive Last an einem ersten Ausgang und ein zweites Wechselspannungssignal für eine zweite kapazitive Last an einem zweiten Ausgang zu liefern, wobei sich das erste und das zweite Wechselspannungssignal in Spannung und Frequenz unterscheiden, wobei die Ansteuerschaltung eine Stromquelle, eine erste, mit der Stromquelle und dem ersten Ausgang verbundene Schalteranordnung zum Erzeugen des ersten Wechselspannungssignals sowie eine zweite, mit der Stromquelle und dem zweiten Ausgang verbundene Schalteranordnung zum Erzeugen des zweiten Wechselspannungssignals umfasst, wobei die erste und die zweite Schalteranordnung so eingerichtet sind, dass sie steuerbar die Polarität schalten, mit welcher der zugehörige Ausgang mit der Stromquelle verbunden wird, wobei die Ansteuerschaltung so eingerichtet ist, dass die erste und die zweite Schalteranordnung im Gebrauch Polaritäten bei unterschiedlichen Frequenzen schalten.

**2.** Ansteuerschaltung nach Anspruch 1, wobei die Stromquelle einen Spannungswandler umfasst.

**3.** Ansteuerschaltung nach Anspruch 2, wobei der Spannungswandler einen Eingang für Niederspannungs-Gleichstrom und einen Ausgang für einen Gleichstrom höherer Spannung umfasst, der sowohl der ersten als auch der zweiten Schalteranordnung zugeführt werden soll, und wobei der Spannungswandler vorzugsweise einen Wandlerschalter umfasst, dessen wiederholtes Schalten die Erzeugung des Stroms hoher Spannung bewirkt, und wobei der Spannungswandler vorzugsweise einen Sperrwandler umfasst.

**4.** Ansteuerschaltung nach Anspruch 2 oder 3, wobei der Spannungswandler so eingerichtet ist, dass er im Gebrauch ein Gleichspannungssignal hoher Spannung erzeugt, das eine Wechselspannungskomponente aufweist, die eine "Quell"-Frequenz aufweist.

**5.** Ansteuerschaltung nach Anspruch 4, wobei die Schaltung so eingerichtet ist, dass im Gebrauch die erste Schalteranordnung einmal pro Zyklus der Wechselspannungskomponente die Polarität schaltet und wobei die Schaltung vorzugsweise so eingerichtet ist, dass sie die erste kapazitive Last einmal pro Halbzyklus der ersten Schalteranordnung und daher einmal pro Zyklus der Wechselspannungskomponente entlädt.

**6.** Ansteuerschaltung nach Anspruch 4 oder 5, wobei die Frequenz, bei der die erste Schalteranordnung im Gebrauch schaltet, ein ganzzahliges Vielfaches der Frequenz ist, bei der die zweite Schalteranordnung im Gebrauch schaltet, wobei im Gebrauch vorzugsweise, wenn die zweite Schalteranordnung schaltet, die erste Schalteranordnung zur selben oder im Wesentlichen zur selben Zeit schaltet, und wobei im Gebrauch vorzugsweise, wenn beide Schalteranordnungen gleichzeitig oder im Wesentlichen gleichzeitig schalten, sich sowohl die erste als auch die zweite kapazitive Last ebenfalls gleichzeitig oder im Wesentlichen gleichzeitig entladen.

7. Ansteuerschaltung nach einem der vorangehenden Ansprüche, wobei ein Widerstand zwischen einer von beiden oder beiden Schalteranordnungen und ihren jeweiligen Ausgängen vorgesehen ist.

8. Ansteuerschaltung nach Anspruch 6 oder 7, wobei ein Widerstand an die Schalteranordnung des zweiten Ausgangs angeschlossen ist und der Widerstandswert des Widerstands R so ist, dass im Gebrauch die Eigenfrequenz des durch den Widerstand R und die Kapazität der an den zweiten Ausgang anzuschließenden Last gebildeten RC-Filters zwischen die Frequenzen fällt, bei denen die beiden kapazitiven Lasten im Gebrauch polaritätsgeschaltet werden.

9. Ansteuerschaltung nach einem der vorangehenden Ansprüche, wobei die Schaltung weiter einen zwischen einer von beiden oder beiden Schalteranordnungen und ihren jeweiligen Ausgängen angeschlossenen Filterkondensator umfasst.

10. Ansteuerschaltung nach einem der vorangehenden Ansprüche, wobei die erste und die zweite kapazitive Last jeweils eine Vielzahl von Segmenten umfassen, die jeweils eine Segmentelektrode aufweisen, wobei die Ansteuerschaltung so eingerichtet ist, dass sie jedem Segment ein Wechselspannungssignal bezüglich einer gemeinsamen gemeinsamen Elektrode jeder Last zuführt, wobei jede Schalteranordnung eine Vielzahl von Segmentschaltersätzen umfasst, die jeweils steuerbar sind, um die Segmentelektroden an die Stromquelle zu schalten, und einen Schaltersatz für die gemeinsamen Elektroden, der steuerbar ist, um die gemeinsame Elektrode an die Stromquelle zu schalten.

11. Ansteuerschaltung nach Anspruch 10, wobei die Schaltersätze so eingerichtet sind, dass sie die zugehörige Elektrode zwischen der Stromquelle und einer Referenzspannung schalten, wobei jeder Schaltersatz vorzugsweise eine Halb-H-Brücke umfasst, die einen zwischen der Elektrode und der Stromquelle angeschlossenen oberen Schalter sowie einen zwischen der Elektrode und der Referenzspannung angeschlossenen unteren Schalter umfasst, und wobei die Ansteuerschaltung vorzugsweise so eingerichtet ist, dass im Gebrauch die Segmentschaltsätze, die sich auf Segmentelektroden beziehen, denen das Wechselspannungssignal zuzuführen ist, gemeinsam und entgegengesetzt zum gemeinsamen Schaltsatz der betreffenden Schalteranordnung geschaltet werden.

12. Ansteuerschaltung nach einem der Ansprüche 10 oder 11, wobei die Schaltsätze einen ersten Zustand aufweisen, bei dem die zu betrachtenden Segmentelektroden mit der Stromquelle verbunden sind und die gemeinsame Elektrode mit der Referenzspannung verbunden ist, sowie einen zweiten Zustand, bei dem die Segmentelektroden mit der Referenzspannung verbunden sind und die gemeinsame Elektrode mit der Stromquelle verbunden ist, und die Schaltsätze zusätzlich einen dritten Zustand aufweisen, bei dem die entsprechenden Elektroden der Segmentelektroden und der gemeinsamen Elektrode sowohl von der Stromquelle als auch vom Referenzpotential getrennt sind.

13. Ansteuerschaltung nach Anspruch 12, wenn sie von Anspruch 6 abhängt, wobei die Schaltung so eingerichtet ist, dass der Schaltsatz der zweiten Last im Gebrauch, wenn er vom ersten Zustand in den zweiten Zustand schaltet, dies über den dritten Zustand tut.

14. Ansteuerschaltung nach einem der Ansprüche 10 bis 13, wobei die gemeinsame Elektrode der ersten und der zweiten kapazitiven Last eine gemeinsame gemeinsame Elektrode umfasst, die von der ersten und der zweiten kapazitiven Last gemeinsam benutzt wird, wobei die gemeinsame gemeinsame Elektrode im Gebrauch mit demjenigen aus dem ersten oder zweiten Ausgang verbunden ist, der bei einer höheren Frequenz polaritätsgeschaltet wird.

15. Ansteuerschaltung nach einem der vorhergehenden Ansprüche in Kombination mit einer ersten kapazitiven Last, die eine Elektrolumineszenz-(EL-)Anzeige umfasst, und mit einer zweiten kapazitiven Last, die eine Polymerdispergierte Flüssigkristall-(PDLC-)Anzeige umfasst.

**Revendications**

1. Un circuit de pilotage pour charges capacitives agencé pour fournir, en fonctionnement, un premier signal de courant alternatif pour une première charge capacitive à une première sortie et un second signal de courant alternatif pour une seconde charge capacitive à une seconde sortie, les premier et second signaux de courant alternatif ayant une tension et une fréquence différente, dans lequel le circuit de pilotage comprend une source de courant, un premier circuit de commutation relié à la source de courant et à la première sortie pour générer le premier signal de courant alternatif, un second circuit de commutation relié à la source de courant et à la seconde sortie pour générer le second signal de courant alternatif, dans lequel chacun des premier et second circuits de commutation est agencé pour commuter de manière contrôlable la polarité avec laquelle la sortie en question est reliée à la source de courant, dans lequel le circuit de pilotage est agencé de telle sorte que, en fonctionnement, les premier et second agencements de commutation changent de polarité à différentes fréquences.

2. Circuit de pilotage selon la revendication 1, dans lequel la source de courant comprend un convertisseur de tension.

3. Circuit de pilotage selon la revendication 2, dans lequel le convertisseur de tension comprend une entrée pour courant continu basse tension, et une sortie pour un courant continu de plus haute tension devant être fourni à la fois aux premier et second circuits de commutation, et dans lequel le convertisseur de tension comprend de préférence un commutateur de convertisseur dont la commutation répétée cause la génération du courant haute tension, et dans lequel le convertisseur de tension comprend de préférence un convertisseur « flyback ».

4. Circuit de pilotage selon l'une quelconque des revendications 2 ou 3, dans lequel le convertisseur de tension est agencé de manière à générer, en fonctionnement, un signal de courant continu haute tension qui a une composante alternative ayant une fréquence « source ».

5. Circuit de pilotage selon la revendication 4, dans lequel le circuit est agencé de telle sorte que, en fonctionnement, le premier circuit de commutation change de polarité une fois par cycle de la composante alternative et dans lequel le circuit est agencé de préférence pour décharger la première charge capacitive une fois par demi-cycle du premier circuit de commutation et, par conséquent, une fois par cycle de la composante alternative.

6. Circuit de pilotage selon la revendication 4 ou 5, dans lequel la fréquence à laquelle le premier circuit de commutation commute, en fonctionnement, est un multiple entier de la fréquence à laquelle le second circuit de commutation commute en fonctionnement ; dans lequel, de préférence, en fonctionnement, lorsque le second circuit de commutation commute, le premier circuit de commutation commute en même temps, ou sensiblement en même temps ; et dans lequel, de préférence, en fonctionnement, lorsque les deux circuits de commutation commutent de manière simultanée ou sensiblement simultanée, les première et seconde charges capacitives se déchargent aussi de manière simultanée ou sensiblement simultanée.

7. Circuit de pilotage selon l'une quelconque des revendications précédentes, dans lequel une résistance est prévue entre l'un ou l'autre des circuits de commutation ou les deux circuits de commutation, et leurs sorties respectives.

8. Circuit de pilotage selon la revendication 6 ou 7, dans lequel une résistance est reliée au circuit de commutation de la seconde sortie et la résistance de la résistance R est telle que, en fonctionnement, la fréquence de résonance du filtre RC formé par la résistance R et la capacité de charge qui doit être associée à la seconde sortie tombe entre les fréquences auxquelles les deux charges capacitives font l'objet d'une commutation de polarité en fonctionnement.

9. Circuit de pilotage selon l'une quelconque des revendications précédentes, dans lequel le circuit comprend en outre un condensateur de filtrage relié entre l'un ou l'autre des circuits de commutation ou les deux circuits de commutation, et leurs sorties respectives.

10. Circuit de pilotage selon l'une quelconque des revendications précédentes, dans lequel les première et seconde charges capacitives comprennent chacune une pluralité de segments, chaque segment ayant une électrode de segment, le circuit de pilotage étant agencé pour fournir à chaque segment un signal de courant alternatif en fonction d'une électrode commune de chaque charge, dans lequel chaque circuit de commutation comprend une pluralité d'ensembles de commutation de segment respectivement contrôlables pour commuter les électrodes de segment sur la source de courant, et un ensemble de commutation d'électrode commune, contrôlable pour commuter l'électrode commune sur la source de courant.

11. Circuit de pilotage selon la revendication 10, dans lequel les ensembles de commutation sont agencés pour commuter l'électrode en question entre la source de courant et une tension de référence, dans lequel chaque ensemble de commutation comprend de préférence un demi pont en H, comprenant un commutateur supérieur relié entre l'électrode et la source de courant et un commutateur inférieur relié entre l'électrode et la tension de référence, et dans lequel le circuit de pilotage est agencé de préférence de telle sorte que, en fonctionnement, les ensembles de commutation de segment relatifs aux électrodes de segment devant recevoir le signal de courant alternatif sont commutés en commun, et de manière opposée à l'ensemble de commutation commun de ce circuit de commutation.

12. Circuit de pilotage selon l'une quelconque des revendications 10 ou 11, dans lequel les ensembles de commutation présentent un premier état où les électrodes de segment devant être éclairées sont reliées à la source de courant et où l'électrode commune est reliée à la tension de référence, et un second état où les électrodes de segment sont reliées à la tension de référence et où l'électrode commune est reliée à la source de courant, et les ensembles de commutation présentent en outre un troisième état où les électrodes en question des électrodes de segment et commune sont déconnectées à la fois de la source de courant et du potentiel de référence.

13. Circuit de pilotage selon la revendication 12, dans la mesure où elle dépend de la revendication 6, dans lequel le circuit est agencé de telle sorte que, en fonctionnement, lorsque l'ensemble de commutation de la seconde charge passe du premier état au second état, cette commutation s'effectue en passant par le troisième état.

14. Circuit de pilotage selon l'une quelconque des revendications 10 à 13, dans lequel l'électrode commune des première et seconde charges capacitives comprend une électrode commune partagée entre des première et seconde charges capacitives, dans lequel l'électrode commune est, en fonctionnement, reliée à l'une quelconque de la première ou de la seconde sortie dont la polarité fait l'objet d'une commutation à une fréquence supérieure.

15. Circuit de pilotage selon l'une quelconque des revendications précédentes, en combinaison avec une première charge capacitive comprenant un affichage électroluminescent (EL) et une seconde charge capacitive comprenant un affichage à cristaux liquides dispersés dans un polymère (PDLC).

Fig 1

Fig 2

Fig 3

Fig 4

Fig 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005121878 PCT
- GB 2327523 A